# EUROPÄISCHE PATENTSCHRIFT

(11) **EP 2 878 411 B1**
(45) Veröffentlichungstag und Bekanntmachung des Hinweises auf die Patenterteilung: **31.05.2017**
(21) Anmeldenummer: 14195145.9
(22) Anmeldetag: 27.11.2014
(51) Int. Cl.: B23Q 11/10

(54) **Werkstückbearbeitungskopf mit Minimalmengenschmierung**
Workpiece processing head with minimal lubrication
Tête d'usinage de pièce ayant un dispositif de lubrification à quantités minimales

(30) Priorität: 28.11.2013 AT 507842013
(43) Veröffentlichungstag der Anmeldung: 03.06.2015
(73) Patentinhaber: "HPC" Produktions GmbH, 9871 Seeboden (AT)
(72) Erfinder: Herz, Werner, 9800 Spittal/Drau (AT); Prodinger, Wolfgang, 9220 Velden am Wörthersee (AT)
(74) Vertreter: Burger, Hannes

(56) Entgegenhaltungen:
- EP-A1- 1 747 082
- WO-A1-2005/107984
- DE-C1- 4 205 273
- DE-C1- 19 538 762

## Beschreibung

Die Erfindung betrifft einen Werkstückbearbeitungskopf mit zumindest einer zuordenbaren Arbeitsspindel, wobei zur Kühlung bzw. Schmierung des in der Arbeitsspindel angeordneten Bearbeitungswerkzeugs, ein 2-Kanal-Minimalmengenschmiersystem verwendet wird.

Im Bereich der zerspanenden Werkstückbearbeitung wird eine Kühlung bzw. Schmierung des Werkzeugs unter Einsatz eines großen Kühlmittelstroms, immer mehr von einer exakt dosierten Schmierung abgelöst. Dabei wird eine sehr geringe Schmiermittelmenge, möglichst genau bei der Schneide des Bearbeitungswerkzeugs ausgebracht, wobei zumeist bessere Ergebnisse hinsichtlich der Standzeit der Werkzeuge erzielt werden können, als dies beim Einsatz einer großen Menge an Schmiermittel möglich ist. Das Schmiermittel wird dabei möglichst nahe dem Bearbeitungswerkzeug fein zerstäubt, sodass die Bearbeitungsstelle bzw. das Bearbeitungswerkzeug quasi von einem Schmiermittelnebel eingehüllt wird. Bekannt ist dazu beispielsweise ein 2-Kanal-Minimalmengenschmiersystem, bei dem Schmiermittel und Druckgas getrennt voneinander in Richtung des Bearbeitungswerkzeugs befördert werden und in einer Mischkammer zusammengeführt werden, wodurch der Schmiermittelnebel gebildet wird. Von der Mischkammer gelangt der Nebel über eine Mischleitung zum Werkzeug.

Derartige Sprühsysteme, welche den Schmiermittelnebel quasi von außen der Bearbeitungsstelle zuführen, sind jedoch im Wesentlichen nur für solche Werkstückbearbeitungen verwendbar, bei denen die Werkzeugschneide während der Bearbeitung permanent vom Schmiermittelnebel benetzt werden kann. Taucht das Bearbeitungswerkzeug nun tiefer in das Werkstück ein, beispielsweise bei Tieflochbohrungen, ist eine Zuführung des Schmiermittelnebels von außen nicht mehr zuverlässig möglich. In diesem Fall wird die 2-Kanal-Minimalmengenschmierung derart gewährleistet, dass die Schmiermittelzuführung durch das Werkzeug erfolgt. Es wird daher zumeist von der Übernahmevorrichtung längs der Drehachse des Bearbeitungswerkzeugs bzw. der Antriebs- und der Arbeitsspindel eine Leitung geführt, welche möglichst nahe dem Bearbeitungswerkzeug in der Mischkammer endet, von wo aus der Schmiermittelnebel zu den Schneiden des Bearbeitungswerkzeuges geleitet wird.

Einen Werkstückbearbeitungskopf mit nur einer Arbeitsspindel mit einem 2-Kanal-Minimalmengenschmiersystem auszustatten, ist dem kundigen Fachmann bekannt, insbesondere sind dafür vorkonfektionierte Systeme verfügbar. Bei derartigen Systemen besteht die Besonderheit darin, dass zwischen einer Medienübernahmevorrichtung, welche zumeist an einem maschinenseitigen Ende des Bearbeitungskopfs angeordnet ist und dem Bearbeitungswerkzeug, welches gegenüberliegend, in Richtung des zu bearbeitenden Werkstücks angeordnet ist, eine 2-Kanal-Minimalmengenschmierleitung angeordnet ist. Da, vereinfacht ausgedrückt, die Schmiermittelleitung und das Bearbeitungswerkzeug permanent flüssigkeitsgekoppelt in Verbindung stehen, kann von einer kontinuierlichen Schmiermittelzuführung zum Bearbeitungswerkzeug ausgegangen werden. Insbesondere sind derartige Systeme kalibrierbar, was bedeutet, dass durch mechanisch konstruktive Vorgaben, zumeist durch spezifische Wahl der Mischkammer, eine genau definierbare Menge an Schmiermittel bzw. Schmiermittelnebel am Bearbeitungswerkzeug bereitsteht.

Um eine hohe Flexibilität in der Durchführung von Bearbeitungsschritten zu erreichen, ist es vorgesehen, dass der Werkzeughalter mit dem darin angeordneten Bearbeitungswerkzeug, von einer Zuordnungsvorrichtung getauscht werden kann. Dazu ist in der Arbeitsspindel eine Werkzeugaufnahme vorgesehen, welche ein Kuppeln des Werkzeughalters und der Arbeitsspindel ermöglicht. Von Bedeutung bei einem 2-Kanal-Minimalmengenschmiersystem ist, dass dieses kalibrierbar ist, also dass eindeutig und zuverlässig festgelegt werden kann, welche Menge an Schmiermittel zum Bearbeitungswerkzeug transportiert wird. Insbesondere muss sichergestellt sein, dass nach einem Wechsel des Bearbeitungswerkzeuges, die Schmiermittelzufuhr sofort im kalibrierten Umfang wieder zur Verfügung steht. Ferner ist es bei derartigen Systemen von Vorteil, dass die Länge der Mischleitung von der Mischkammer zu den Bearbeitungsschneiden sehr kurz ist, sodass die Gefahr einer Entmischung bzw. einer Versackung des Schmiermittelnebels weitestgehend verhindert wird.

Eine völlig andere Situation ergibt sich nun bei einem Werkstückbearbeitungskopf mit zumindest einer, bevorzugt jedoch mehreren zuordenbaren Arbeitsspindeln. Im Gegensatz zum vorherigen System wird hier nicht nur der Werkzeughalter mit dem darin angeordneten Bearbeitungswerkzeug, sondern die gesamte Arbeitsspindel mit dem darin angeordneten Werkzeughalter und Werkzeug getauscht. Dadurch ergibt sich zwangsweise eine Kupplungsstelle zwischen der Arbeitsspindel und einer Antriebsspindel, auf welcher ein Motor angeordnet bzw. welche Arbeitsspindel mit einer Antriebseinheit verbunden ist.

Dadurch, dass die Kupplungsstelle bei einem derartigen System deutlich vom Bearbeitungswerkzeug wegverschoben ist, ergibt sich das Problem, dass über den Schmiermittelstatus in der Schmiermittelleitung der bzw. den Arbeitsspindeln, welche aktuell nicht der Antriebsspindel zugeordnet sind, keine Aussage getroffen werden kann. Beispielsweise kann es vorkommen, dass nach Aufhebung der Zuordnung einer Antriebs- zur Arbeitsspindel, Schmiermittel aus der Schmiermittelleitung austritt, was zumindest zwei schwerwiegende Nachteile hat. Einerseits kommt es durch das auslaufende Schmiermittel zu einer Verschmutzung des Werkstückbearbeitungskopfes, andererseits ist nach einer erneuten Herstellung der Zuordnung der Arbeitsspindel zur Antriebsspindel eine Zeitspanne gegeben, in der die Bearbeitungsschneiden nicht von einem Schmiermittelnebel umgeben sind, da sich die Schmiermittelleitung in der Arbeitsspindel erst wieder mit Schmiermittel füllen muss. In dieser Zeitspanne kann es jedoch insbesondere auch zum Austritt unerwünscht großer Schmiermitteltropfen kommen.

Beispielsweise zeigen die Dokumente EP 1 747 082 B1 und WO 2005/107984 A1 einen Revolverkopf mit einem System zur Minimalmengenschmierung. Die Dokumente offenbaren, dass eine Druckluft und eine Schmiermittelleitung zu jeder Arbeitsspindel geführt werden, wobei vor der Arbeitsspindel eine Mischkammer angeordnet ist, von welcher Mischkammer eine Mischleitung durch die Arbeitsspindel zum Bearbeitungswerkzeug geführt ist. Für einen Schmiermittelnebel, welcher innerhalb einer sich sehr schnell drehenden Arbeitsspindel transportiert wird, besteht die Gefahr, dass es an Unregelmäßigkeiten längs der Transportleitung zur Anlagerung von Schmiermitteltröpfchen kommen kann, sogenannten Versackungen, wodurch sich gefährlich große Tropfen bilden können. Daher offenbaren die beiden Dokumente als besonderen Vorteil, dass die Mischleitung einstückig ausgeführt ist, sodass ein möglichst kontinuierlicher Transport des Schmiermittelnebels über den langen Weg von der Mischkammer zum Bearbeitungswerkzeug gegeben ist.

Der Oberbegriff des Anspruchs 1 basiert auf das Dokument EP 1 747 082 B1.

Ein Nachteil dieses Systems liegt wieder darin, dass es bei einem Wechsel der Arbeitsspindel, wie bereits zuvor beschrieben, zu einer Unterbrechung der Schmiermittelleitung kommt, wodurch bei einer erneuten Zuordnung der Arbeitsspindel nicht gewährleistet werden kann, dass sofort nach dem Wechsel eine kalibrierte Menge an Schmiermittel am Bearbeitungswerkzeug zur Verfügung steht.

Die Aufgabe der Erfindung liegt also darin, einen Werkstückbearbeitungskopf zu schaffen, welcher zumindest eine zuordenbare Arbeitsspindel aufweist und welcher mit einem System zur Minimalmengenschmierung ausgestattet ist. Insbesondere ist es Aufgabe der Erfindung zu gewährleisten, dass kalibrierte Parameter der Minimalmengenschmierung durch den Zuordnungsvorgang nicht beeinträchtigt werden.

Die Aufgabe der Erfindung wird durch einen Werkstückbearbeitungskopf nach Anspruch 1 gelöst.

Beim Zuordnungsvorgang wird der Antriebsstrang, gebildet aus der Antriebsspindel und der Arbeitsspindel, mittels der Kupplung getrennt und von der Zuordnungsvorrichtung die aktuell in Verwendung befindliche Arbeitsspindel durch eine, für den nächsten Bearbeitungsschritt erforderliche Arbeitsspindel, ersetzt.

Durch die gegenständliche Ausbildung wird erreicht, dass es durch den Zuordnungsvorgang zu keinem unkontrollierten Austritt von Schmiermittel aus dem Schmiermittelkanal kommt. Das sich durch die Trennung des Antriebsstrangs ändernde Volumen des Schmiermittels im Schmiermittelkanal der Antriebsspindel wird ferner von dem Volumenausgleichselement kompensiert.

Ferner wird durch die gegenständliche Ausbildung auch erreicht, dass nach einem Zuordnungsvorgang sofort eine Versorgung des Bearbeitungswerkzeugs mit dem Schmiermittelnebel gegeben ist. Insbesondere wird dadurch verhindert, dass es in der Arbeitsspindel zu einer Entleerung des Schmiermittelkanals kommen kann, was nach Reaktivierung der Schmiermittelzuführung zu einem ungleichmäßigem Schmiernebelausstoß führen würde. Somit wird in vorteilhafter Weise einerseits Schmiermittel eingespart, eine Verschmutzung der Maschine verhindert und insbesondere eine Wartezeit vermieden, die andernfalls erforderlich wäre, um erneut eine stabile Produktion des Schmiermittelnebels zu gewährleisten.

Eine Weiterbildung besteht darin, dass die Kupplung durch eine Längsverzahnung des hinteren Endes des Spindelkörpers und des vorderen Endes der Antriebsspindel gebildet ist. Somit wird ein einfaches Trennen des Antriebsstrangs bei gleichzeitiger guter Kraftübertragung im eingekuppelten Zustand gewährleistet. Ferner ist bei einer derartigen Ausführung der Kupplungsmechanismus sehr einfach realisierbar, bspw. in der Art einer Muffe.

Beim bzw. während des Zuordnungsvorgangs muss der Antriebsstrang derart getrennt werden, dass die Zuordnungsvorrichtung die Arbeitsspindel wechseln kann. Gemäß einer Weiterbildung ist vorgesehen, dass die Antriebsspindel und/oder die Aufnahme der Antriebsspindel, eine Gleitführung aufweist, welche einen Versatz des vorderen Endes der Antriebsspindel längs der Bearbeitungsdrehachse im Bereich von 10mm - 30mm ermöglicht, insbesondere einen Versatz von 25mm. Somit ist es möglich, dass die Antriebsspindel um diesen Versatz von der Arbeitsspindel wegbewegt wird, wodurch für den Zuordnungsvorgang ausreichend Platz geschaffen wird. Gemäß der gegenständlichen Ausführung ist insbesondere in diesem Fall gewährleistet, dass aus dem Schmiermittelkanal sowohl der Arbeits- als auch der Antriebsspindel kein Schmiermittel austritt.

Nach einer Weiterbildung ist vorgesehen, dass das Volumenausgleichselement in der Medienübernahmevorrichtung angeordnet ist. Da im Bereich der Arbeitsspindel sehr beengte Platzverhältnisse herrschen, ist die Ausbildung dahingehend von Vorteil, dass das Platz fordernde Volumenausgleichselement in einem Bereich angeordnet ist, wo dafür leichter Platz gefunden werden kann.

Nach einer Weiterbildung ist es auch möglich, dass das Volumenausgleichselement in der 2-Kanal-Förderleitungskupplung oder in der 2-Kanal-Förderleitung angeordnet ist. Beim Zuordnungsvorgang wird ein Schmiermittelvolumen im Schmiermittelkanal bewegt, was den Volumenausgleich erforderlich macht. Es ist daher von Vorteil, wenn das Volumenausgleichselement möglichst nahe bei der bei der Förderleitungskupplung angeordnet ist, um die Masse des sich bewegenden Schmiermittels gering zu halten.

Eine Weiterbildung ist dadurch gekennzeichnet, dass die 2-Kanal-Förderleitung als Koaxialleitung ausgebildet ist, wobei der innenliegende Schmiermittelkanal vom Druckgaskanal umgeben ist. Diese Ausbildung hat den Vorteil, dass sich eine derartige Förderleitung besonders gut in sich drehenden Wellen anordnen lässt und sich insbesondere hinsichtlich der Auswuchtung neutral verhält. Gemäß der Erfindung wird die 2-Kanal-Förderleitung zumindest über einen Teilabschnitt der Längsverschiebung mit der Antriebsspindel bewegungsverbunden sein. Das Volumenausgleichselement weist einen mit dem Schmiermittelkanal verbundenen Kolben auf, welcher Kolben relativ zu einem Zylinder des Volumenausgleichselements längsverschiebbar angeordnet ist. Somit wird der Kolben der Bewegung der Förderleitung folgen und sich bei einem Längsversatz derselben, während des Zuordnungsvorgangs, im Zylinder bewegen.

Um den Volumenausgleich im Zylinder durch den sich bewegenden Kolben zu kompensieren, weist gemäß einer Weiterbildung der Zylinder einen, die Kolbenseitenwand zumindest abschnittsweise umgebenden Schmiermittel-Transferabschnitt auf. Das Volumen in diesem Transferabschnitt bleibt auch bei Bewegung des Kolbens konstant.

Gemäß einer Weiterbildung ist vorgesehen, dass der Kolben eine Durchführung aufweist, welche eine flüssigkeitsdurchlässige Verbindung zwischen dem Schmiermittelkanal und dem Schmiermittel-Transferabschnitt bildet. Somit wird gewährleistet, dass es trotz einer Bewegung des Kolbens, hervorgerufen durch die sich längsverschiebende 2-Kanal-Förderleitung während des Zuordnungsvorgangs, zu keiner Änderung des Schmiermittelvolumens im Schmiermittelkanal kommt.

Eine vorteilhafte Weiterbildung besteht auch darin, dass der Zylinder mit einer Vorrichtung zur Druckbeaufschlagung verbunden ist. Da die Förderleitungskupplung eine Kopplung und Abdichtung der Förderleitung gewährleisten muss, insbesondere des Schmiermittelkanals, hat diese Weiterbildung den Vorteil, dass über den Kolben und den damit verbundenen Schmiermittelkanal, ein Druck auf die Förderleitungskupplung ausgeübt werden kann. Ferner ist es auch möglich, dass die Förderleitungskupplung die Verbindung zwischen Antriebs- und Arbeitsspindel herstellt und dann der Schmiermittelkanal in Richtung der Förderleitungskupplung gedrückt bzw. geschoben wird und auch diese Verbindung herstellt. Somit wird eine Trennung der mechanischen, rotatorischen Kopplung der Antriebs- und Arbeitsspindel von der Kopplung der 2-Kanal-Förderleitung erreicht.

Eine Weiterbildung besteht auch darin, dass die 2-Kanal-Förderleitungskupplung im hinteren Ende der Arbeitsspindel angeordnet ist. Bei einer nicht zugeordneten Arbeitsspindel ergibt sich das Problem, dass ohne diese Weiterbildung die 2-Kanal-Förderleitung am hinteren Ende der Arbeitsspindel offen ist und es somit zu einem unerwünschten Austritt von Schmiermittel kommen kann. Mit dieser Weiterbildung ist dies verhindert.

Eine Weiterbildung besteht darin, dass die 2-Kanal-Förderleitungskupplung ein erstes Dichtelement für den Schmiermittelkanal und ein zweites Dichtelement für den Druckgaskanal aufweist, wobei das erste und/oder zweite Dichtelement als O-Ring ausgebildet ist.

Eine Weiterbildung, nach der das Ventil ein Ventilgehäuse mit einer kupplungsseitigen Öffnung und ein Anschlusselement für den antriebsspindelseitigen Schmiermittelkanal aufweist, und wobei ferner im Ventilgehäuse vor der Öffnung ein Verschlusselement angeordnet ist hat den Vorteil, dass eine zuverlässige Abdichtung des Schmiermittelkanals möglich ist.

Dahingehend ist auch eine Weiterbildung von Vorteil, nach der das Verschlusselement durch ein druckbeaufschlagtes drittes Dichtelement gebildet ist. Durch die Druckbeaufschlagung ist gewährleistet, dass ein selbsttätiges Schließen und/oder Öffnen des Ventils möglich ist.

Eine Weiterbildung, nach der der Druck der Druckbeaufschlagung kleiner ist als ein Arbeitsdruck im antriebsspindelseitigen Schmiermittelkanal hat den Vorteil, dass bei Beaufschlagung des Schmiermittelkanals der Antriebsspindel, das Dichtelement selbsttätig öffnet und somit ein Transport von Schmiermittel zur Arbeitsspindel gegeben ist. Insbesondere ist jedoch gewährleistet, dass bei Absenkung des Drucks im antriebsspindelseitigen Schmiermittelkanal, ein selbsttätiges Schließen des Dichtelements sichergestellt ist.

Eine weitere vorteilhafte Weiterbildung kann auch darin bestehen, dass das Verschlusselement durch eine druckbeaufschlagte Klappe mit einem Kontaktabschnitt für den antriebsspindelseitigen Schmiermittelkanal gebildet ist. Somit kann eine Verbindung des antriebs- und arbeitsspindelseitigen Schmiermittelkanals dadurch erreicht werden, dass der Antriebsspindelseite Schmiermittelkanal nach vorne, in Richtung der Arbeitsspindel, gedrückt wird und die Klappe öffnet.

Auch von Vorteil ist eine Weiterbildung, nach der das Verschlusselement durch ein Fliehkraft-Dichtelement gebildet ist. Somit wird eine Öffnung und Herstellung eines durchgehenden Schmiermittelkanals, durch die sich drehende Antriebs- und Arbeitsspindel gewährleistet. Bei Stillstand ist unmittelbar ein Verschluss des Kanals gewährleistet.

Nach einer Weiterbildung ist vorgesehen, dass die Zuordnungsvorrichtung durch einen Revolverkopf gebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine schematisierte Gesamtübersicht über den Werkstückbearbeitungskopf;
- Fig. 2: eine Detaildarstellung der 2-Kanal-Förderleitungskupplung;
- Fig. 3: eine Detaildarstellung des Volumenausgleichselements.

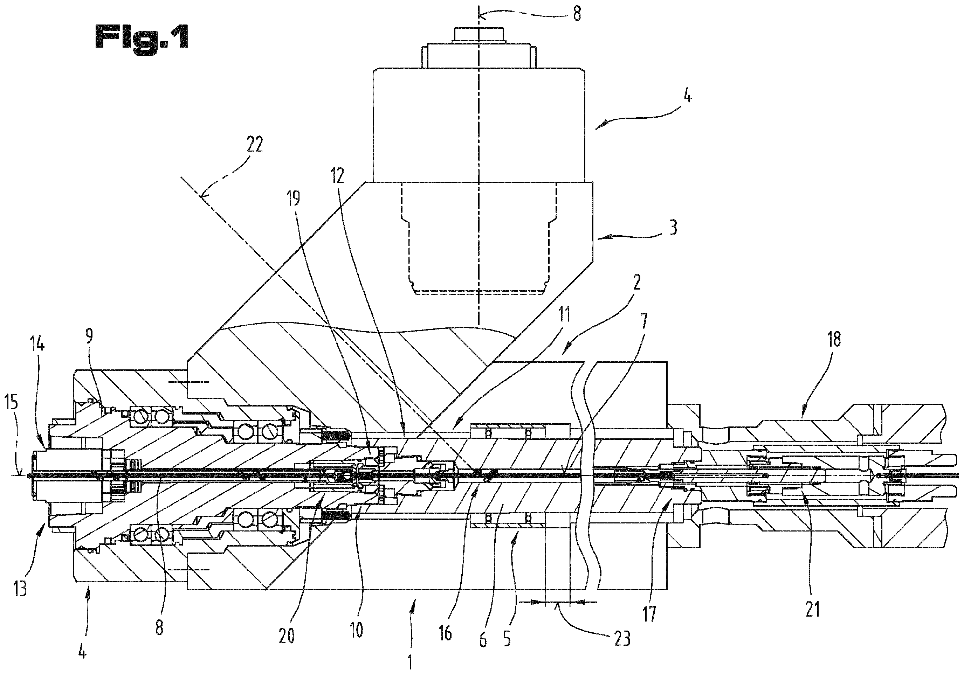

Fig. 1 zeigt eine stark vereinfachte Darstellung des gegenständlichen Werkstückbearbeitungskopfs 1. Der Werkstückbearbeitungskopf 1 umfasst ein Bearbeitungskopfgehäuse 2, eine damit verbundene Zuordnungsvorrichtung 3 und zumindest eine, von der Zuordnungsvorrichtung 3 dem Bearbeitungskopfgehäuse 2 zuordenbare Arbeitsspindel 4. In einer Aufnahme 5 des Bearbeitungskopfgehäuses 2 ist eine Antriebsspindel 6 längs der Spindelachse 7 verschiebbar angeordnet. Die Arbeitsspindel 4 weist ferner einen, um seine Drehachse 8 drehbar gelagerten Spindelkörper 9 auf, welcher Spindelkörper 9 an seinem hinteren Ende 10 über eine lösbare Kupplung 11 mit einem vorderen Ende 12 der Antriebsspindel 6 drehverbunden gekoppelt ist. Der Spindelkörper 9 weist ferner an seinem vorderen Ende 13 eine Werkzeugaufnahme 14 auf, in welcher ein Werkzeughalter mit einem Bearbeitungswerkzeug angeordnet werden kann.

Im zugeordneten Zustand stimmen die Richtung der Drehachse 8 des Spindelkörpers 9 und die Richtung der Spindelachse 7 der Antriebsspindel 6 überein und bilden eine gemeinsame Bearbeitungsdrehachse 15. Längs dieser Bearbeitungsdrehachse 15 ist eine 2-Kanal-Förderleitung 16 für eine Minimalmengenschmierung vorhanden. Die 2-Kanal-Förderleitung 16 weist an einem, dem Spindelkörper 9 gegenüberliegenden, hinteren Ende 17 eine Medienübernahmevorrichtung 18 und im Bereich der Kupplung 11 eine 2-Kanal-Förderleitungskupplung 19 auf. Die 2-Kanal-Förderleitungskupplung 19 weist dabei zumindest für den Schmiermittelkanal ein selbsttätig schließendes Ventil 20 auf, ferner ist mit dem Schmiermittelkanal der 2-Kanal-Förderleitung 16 im Abschnitt von der Förderleitungskupplung 19 bis zur Medienübernahmevorrichtung 18 ein Volumenausgleichselement 21 angeordnet.

Die mit dem Bearbeitungskopfgehäuse 2 verbundene Zuordnungsvorrichtung 3 ist dazu ausgebildet, eine von zumindest zwei möglichen Arbeitsspindeln 4, der Antriebsspindel 6 zuzuordnen, sodass die Drehachse 8 des Spindelkörpers 9 mit der Spindelachse 7 der Antriebsspindel 6 überein stimmt und die Bearbeitungsdrehachse 15 bildet. Die Zuordnungsvorrichtung 3 kann beispielsweise durch einen Kronenrevolver gebildet sein, bei dem mehrere Arbeitsspindeln 4 auf einer um eine Achse 22 drehbar gelagerten Vorrichtung angeordnet sind. Beim Zuordnungsvorgang wird die Zuordnung der aktuell im Einsatz befindlichen Arbeitsspindel 4 zur Antriebsspindel 6 aufgehoben, die Zuordnungsvorrichtung 3 um einen oder mehrere Arbeitsspindelpositionen verdreht, sodass eine andere Arbeitsspindel 4 an die Zuordnungsposition gelangt und die Zuordnung zur Antriebsspindel 6 wieder hergestellt wird.

Um die Antriebsspindel 6 und Arbeitsspindel 4 bzw. den Spindelkörper 9 koppeln zu können, ist einerseits eine Kupplung 11 vorgesehen, welche eine mechanische Kopplung der Antriebsspindel 6 und Arbeitsspindel 4 herstellt. Dadurch wird die von einer nicht dargestellten Antriebsvorrichtung auf die Antriebsspindel 6 aufgebrachte Drehbewegung auf die Arbeitsspindel 4, insbesondere auf den Spindelkörper 9 übertragen. Da ferner ein System zur Minimalmengenschmierung vorhanden ist, ist ferner vorgesehen, dass im Bereich der Kupplung 11 eine 2-Kanal-Förderleitungskupplung 19 angeordnet ist, welche die Koppelbarkeit der 2-Kanal-Förderleitung 16 der Antriebsspindel 6 und der Förderleitung 16 des Spindelkörpers 9 ermöglicht.

Um den Zuordnungsvorgang durchführen zu können, ist es erforderlich, dass die Kupplung 11 bzw. die Förderleitungskupplung 19 getrennt werden. Dies wird beispielsweise dadurch erreicht, dass die Antriebsspindel 6 mittels der Aufnahme 5 relativ zum Bearbeitungskopfgehäuse 2 längs der Bearbeitungsdrehachse 15 um einen Versatz 23 verschoben werden kann. Die dafür erforderliche Vorrichtung ist in der schematisierten Darstellung nicht dargestellt. Durch eine Bewegung der Antriebsspindel 6 um den Versatz 23 wird gewährleistet, dass sich die Kupplung 11 und auch die 2-Kanal-Förderleitungskupplung 19 ausreichend weit von den jeweiligen Gegenstücken der Arbeitsspindel 4 bzw. des Spindelkörpers 9 entfernt haben, sodass bei einem Tausch der Arbeitsspindel 4 durch die Zuordnungsvorrichtung 3, eine ungehinderte Zuordnungsbewegung in dem Kupplungsbereich möglich ist.

Im zugeordneten Zustand ist von einer nicht dargestellten, externen Schmiermittelbereitstellungsvorrichtung, über eine nicht dargestellte Zuführleitung zur Medienübernahmevorrichtung 18, bis zu dem, in der Werkzeugaufnahme 14 angeordneten Bearbeitungswerkzeug, innerhalb des Schmiermittelkanals der 2-Kanal-Förderleitung 16, ein durchgängiges Schmiermittelvolumen vorhanden. Die Medienübernahmevorrichtung 18 ist am Bearbeitungskopfgehäuse 2 angeordnet und führt somit, im Gegensatz zur Antriebsspindel 6, keine Drehbewegung um die Bearbeitungsdrehachse 15 aus. Daher ist in der Medienübernahmevorrichtung 18 bevorzugt eine an sich bekannte Drehdurchführung für Medien vorhanden.

Bei einem Zuordnungsvorgang wird sich die Antriebsspindel 6 längs der Bearbeitungsdrehachse 15 um den Versatz 23 bewegen, die Medienübernahmevorrichtung 18 bleibt jedoch aufgrund der Anordnung am Bearbeitungskopfgehäuse 2 in Ruhe. Dies führt dazu, dass sich das Volumen des Schmiermittels im Leitungssystem von der externen Schmiermittelbereitstellungsvorrichtung bis in den Schmiermittelkanal der 2-Kanal-Förderleitung 16, ändert. Um einen Austritt von Schmiermittel aus dem während des Zuordnungsvorgangs offenen Ende des Schmiermittelkanals im Bereich des vorderen Endes der Antriebsspindel 12 zu verhindern, ist ein Volumenausgleichselement 21 vorhanden, welches diese Volumensänderung kompensiert.

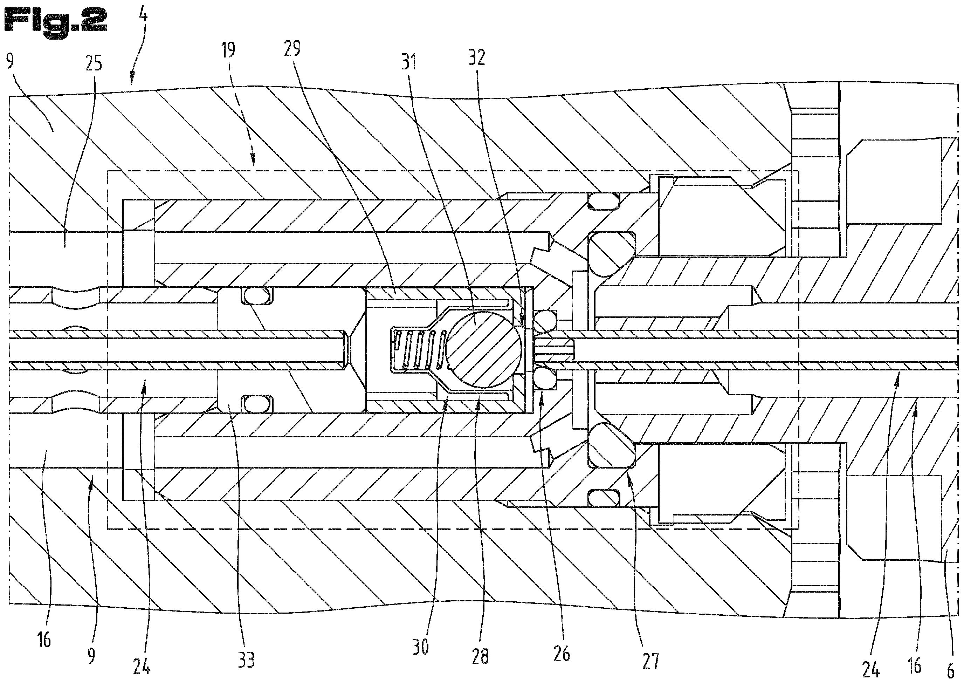

Fig. 2 zeigt eine Detaildarstellung der 2-Kanal-Förderleitungskupplung 19, welche eine Kopplung der 2-Kanal-Förderleitung 16, der Antriebsspindel 6 und der 2-Kanal-Förderleitung 16 des Spindelkörpers 9 der Arbeitsspindel ermöglicht. Gemäß einer bevorzugten Ausbildung ist die 2-Kanal-Förderleitung 16 koaxial ausgebildet, wobei ein Schmiermittelkanal 24 von einem Druckgaskanal 25 umgeben ist. Die 2-Kanal-Förderleitungskupplung 19 ist nun derart ausgebildet, dass sowohl eine Kopplung der beiden Druckgaskanäle 25, als auch der Schmiermittelkanäle 24 gegeben ist und dass insbesondere auch eine Abdichtung des Schmiermittel- 24 durch den Druckgaskanal 25 gewährleistet ist. Daher ist vorgesehen, dass die Förderleitungskupplung 19 ein erstes Dichtelement 26 aufweist, welches erste Dichtelement eine flüssigkeitsdichte Kopplung des Schmiermittelkanals 24 ermöglicht. Ferner weist die Förderleitungskupplung 19 ein zweites Dichtelement 27 auf, welches eine druckgasdichte Kopplung des Druckgaskanals 25 ermöglicht. Bevorzugt sind das erste 26 und zweite 27 Dichtelement als O-Ring ausgebildet. Das erste 26 und zweite 27 Dichtelement sind bevorzugt jeweils in einer Ausnehmung des Spindelkörpers angeordnet, wobei im zugeordneten Zustand eine Flanke des Schmiermittelkanals 24 und eine Flanke des Druckgaskanals 25 der 2-Kanal-Förderleitung 16 der Antriebsspindel 6 gegen das erste 26 bzw. zweite 27 Dichtelement drücken. Durch das Gegendrücken kommt es zu einer Verquetschung der Dichtelemente und somit zu einer sicheren Abdichtung der jeweiligen Kanäle.

Wie bereits zuvor erwähnt, ergibt sich beim Abkoppeln der Arbeitsspindel das Problem, dass die 2-Kanal-Förderleitung 16 an beiden Enden offen wäre und es somit zu einem Austritt von Schmiermittel aus dem Schmiermittelkanal 24 kommen würde. Gemäß der gegenständlichen Ausführung der Förderleitungskupplung ist jedoch vorgesehen, dass im Schmiermittelkanal 24 ein Ventil 28 angeordnet ist, welches Ventil 28 ein Ventilgehäuse 29 und ein Verschlusselement 30 aufweist. Das Verschlusselement 30 ist bevorzugt durch ein drittes Dichtelement 31 gebildet, welches Dichtelement innerhalb einer Haltevorrichtung des Verschlusselements 30 mit einer Druckbeaufschlagung gehalten wird. Durch die Druckbeaufschlagung wird das dritte Dichtelement 31 gegen eine antriebsspindelseitige Öffnung 32 des Ventilgehäuses gedrückt und verschließt diese dicht gegenüber der Umgebung. Diese Situation ist in Fig. 2 dargestellt. Der antriebsspindelseitigen Öffnung 32 gegenüberliegend weist das Ventilgehäuse 29 ein Anschlusselement 33 auf, über welches der Schmiermittelkanal 24 der 2-Kanal-Förderleitung 16 des Spindelkörpers 9 mit dem Ventilgehäuse verbunden ist.

Solange im Schmiermittelkanal 24 der Antriebsspindel 6, kein Druck oder ein gegenüber der Druckbeaufschlagung des dritten Dichtelements 31 geringerer Druck herrscht, verharrt das Ventil 28 in seiner geschlossenen Position und dichtet die antriebsspindelseitige Öffnung 32 ab. Somit ist gewährleistet, dass sich Schmiermittel, welches sich im Schmiermittelkanal 24 der 2-Kanal-Förderleitung 16 des Spindelkörpers 9 befindet, nicht unkontrolliert aus diesem austreten kann. Während das Ventil 28 noch geschlossen ist, kann jedoch bereits der Druckgaskanal 25 mit Druck beaufschlagt werden, sodass Druckgas, zumeist Druckluft, über die Förderleitungskupplung 19 zum Bearbeitungswerkzeug strömen kann. Dies hat den Vorteil, dass der Mischkanal im Werkzeughalter, unmittelbar vor dem Bearbeitungswerkzeug, sowie die Zuführungskanäle im Bearbeitungswerkzeug, von der durchströmenden Druckluft ausgeblasen und somit gereinigt werden können. Somit lassen sich in vorteilhafter Weise gegebenenfalls vorhandene Anhaftungen von einem vorherigen Bearbeitungsvorgang entfernen.

Zur Bearbeitung des Werkstücks wird nun von der externen Schmiermittelbereitstellungsvorrichtung der Druck im antriebsspindelseitigen Schmiermittelkanal 24 über den Druck der Druckbeaufschlagung des dritten Dichtelements 31 erhöht, sodass dieses zurückgedrückt wird und die antriebsspindelseitige Öffnung 32 freigibt, wodurch Schmiermittel ungehindert zum Bearbeitungswerkzeug befördert werden kann. Nach einer bevorzugten Ausbildung sind die Druckverhältnisse im Schmiermittelkanal 24 bzw. Druckgaskanal 25 derart gewählt, insbesondere ist der Druck im Druckgaskanal 25 höher als jener im Schmiermittelkanal 24, sodass sich eine zusätzliche Druckwirkung auf das erste Dichtelement 26 und damit eine Verbesserung der Abdichtung ergibt. Sollte es dennoch zu einer mangelhaften Abdichtung im Bereich des ersten Dichtelements 26 kommen, ist gewährleistet, dass kein Schmiermittel aus der Förderleitungskupplung austreten und umliegende Maschinenteile verschmutzen kann, da gegebenenfalls austretendes Schmiermittel von der im Druckgaskanal 25 strömenden Druckluft in Richtung des Bearbeitungswerkzeugs abtransportiert wird. Bevorzugt beträgt der Arbeitsdruck im Druckgaskanal 25 10 bar, der Arbeitsdruck im Schmiermittelkanal 24 8 bar.

Durch diese Ausbildung ist jedenfalls gewährleistet, dass im drucklosen Zustand des Schmiermittelkanals der Antriebsspindel das Ventil selbsttätig schließt und somit ein im Schmiermittelkanal 24 der Arbeitsspindel 4 vorhandenes Schmiermittel auslaufsicher im Kanal hält.

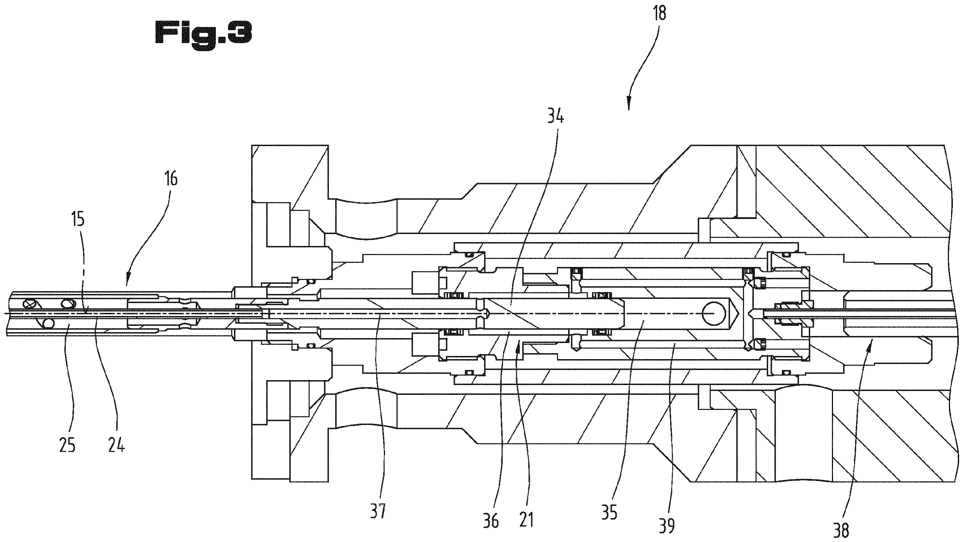

Fig. 3 zeigt eine Detaildarstellung der Medienübernahmevorrichtung 18 mit dem darin angeordneten Volumenausgleichselement 21. Das Volumenausgleichselement weist einen Kolben 34 auf, welcher längs der Bearbeitungsdrehachse 15 in einem Zylinder 35 verschiebbar angeordnet ist. In der Zylinderwand ist ein Schmiermitteltransferabschnitt 36 vorgesehen, welcher über eine Durchführung 37 im Kolben 34 mit dem Schmiermittelkanal 24 der 2-Kanal-Förderleitung 16 der Antriebsspindel verbunden ist. Bevorzugt ist der Kolben 34 mit dem Schmiermittelkanal 24 bewegungsverbunden, sodass sich der Versatz der Antriebsspindel auf den Kolben überträgt und sich dieser im Zylinder bewegt. Das Schmiermittel wird von einer externen Bereitstellungsvorrichtung über eine nicht dargestellte Anschlussvorrichtung, insbesondere über eine Drehdurchführung, in ein Anschlussstück 38 zugeführt, und im Volumenausgleichselement 21 über eine Zuführleitung 39 dem Schmiermitteltransferabschnitt zugeführt. Durch diese Ausführung des Volumenausgleichselements 21, insbesondere des Schmiermitteltransferabschnitts 36 des Zylinders 35, in Kombination mit der Durchführung 37 des Kolbens 34, ist gewährleistet, dass unabhängig von der Stellung des Kolbens im Zylinder stets dasselbe Volumen im Schmiermittelkanal 24 vorhanden ist. Somit wird es möglich, dass es während des Zuordnungsvorgangs, also während die Antriebsspindel um den Versatz zurückfährt, zu keinem unerwünschten Austritt von Schmiermittel aus dem Schmiermittelkanal 24 der Antriebsspindel kommt.

Gemäß einer bevorzugten Ausbildung ist die 2-Kanal-Förderleitung, insbesondere jedoch der Schmiermittelkanal mit der Antriebsspindel bewegungsverbunden. In einer Weiterbildung ist es jedoch auch möglich, dass sich beispielsweise der Schmiermittelkanal relativ zur Arbeitsspindel längs der Bearbeitungsdrehachse verschieben kann und somit das Kuppeln des Schmiermittelkanals vom Versatz der Antriebsspindel unabhängig wird. Diesbezüglich ist eine Weiterbildung von Vorteil, nach der der Zylinder 35 mit einer Vorrichtung zur Druckbeaufschlagung des Zylinders verbunden ist, da somit der Schmiermittelkanal gezielt längs der Bearbeitungsdrehachse bewegt werden kann, wodurch eine selektive Kopplung bzw. Entkopplung der Förderleitungskupplung möglich ist. Beispielsweise kann das Ventil der Förderleitungskupplung einen vorgespannten Ventildeckel aufweisen, welcher durch ein gezieltes nach vorne bewegen des Schmiermittelkanals, aufgrund einer Druckbeaufschlagung des Zylinders, geöffnet wird.

Gemäß der bevorzugten Ausbildung wird beim Kupplungsvorgang die Arbeitsspindel um den Versatz zurückbewegt. Es ist jedoch auch möglich, dass die Kupplung zwischen der Antriebsspindel und dem Spindelkörper der Arbeitsspindel bewegt wird, um die Kopplung herzustellen. In diesem Fall ist es ebenfalls von Vorteil, wenn der Schmiermittelkanal längs der Bearbeitungsdrehachse relativ zur feststehenden Antriebsspindel zurückgezogen werden kann, um so ein ungehindertes Wegschwenken der eben zugeordneten Arbeitsspindel zu ermöglichen.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten des Werkstückbearbeitungskopf, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander gemäß den beiliegenden Ansprüchen möglich sind.

Der Ordnung halber sei abschließend darauf hingewiesen, dass zum besseren Verständnis des Aufbaus des Werkstückbearbeitungskopfs diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Werkstückbearbeitungskopf | 30 | Verschlusselement |
| 2 | Bearbeitungskopfgehäuse | 31 | Dichtelement |
| 3 | Zuordnungsvorrichtung | 32 | antriebsspindelseitige Öffnung |
| 4 | Arbeitsspindel | 33 | Anschlusselement |
| 5 | Aufnahme | 34 | Kolben |
| 6 | Antriebsspindel | 35 | Zylinder |
| 7 | Spindelachse | 36 | Schmiermitteltransferabschnitt |
| 8 | Drehachse | 37 | Durchführung |
| 9 | Spindelkörper | 38 | Anschlussstück |
| 10 | hinteres Ende des Spindelkörpers | 39 | Zuführleitung |
| 11 | Kupplung | | |
| 12 | vorderes Ende der Antriebsspindel | | |
| 13 | vorderes Ende des Spindelkörpers | | |
| 14 | Werkzeugaufnahme | | |
| 15 | Bearbeitungsdrehachse | | |
| 16 | 2-Kanal-Förderleitung | | |
| 17 | hinteres Ende der 2-Kanal-Förderleitung | | |
| 18 | Medienübernahmevorrichtung | | |
| 19 | 2-Kanal-Förderleitungskupplung | | |
| 20 | Ventil | | |
| 21 | Volumenausgleichselement | | |
| 22 | Achse | | |
| 23 | Versatz | | |
| 24 | Schmiermittelkanal | | |
| 25 | Druckgaskanal | | |
| 26 | Dichtelement | | |
| 27 | Dichtelement | | |
| 28 | Ventil | | |
| 29 | Ventilgehäuse | | |

## Patentansprüche

1. Werkstückbearbeitungskopf (1) umfassend
ein Bearbeitungskopfgehäuse (2), eine damit verbundene Zuordnungsvorrichtung (3) und zumindest eine, von der Zuordnungsvorrichtung (3) dem Bearbeitungskopfgehäuse (2) zuordenbare Arbeitsspindel (4),
wobei in einer Aufnahme (5) des Bearbeitungskopfgehäuses (2), eine Antriebsspindel (6) um ihre Spindelachse (7) drehbar gelagert angeordnet ist und wobei ferner die Antriebsspindel (6) oder die Aufnahme (5) längs der Spindelachse (7) verschiebbar angeordnet ist,
und wobei die Arbeitsspindel (4) einen, um seine Drehachse (8) drehbar gelagerten Spindelkörper (9) aufweist, welcher Spindelkörper (9) an einem hinteren Ende (10) über eine lösbare Kupplung (11) mit einem vorderen Ende (12) der Antriebsspindel (6) drehverbunden gekoppelt ist,
und wobei ferner der Spindelkörper (9) an einem vorderen Ende (13) eine Werkzeugaufnahme (14) aufweist, in welcher ein Werkzeughalter mit einem Bearbeitungswerkzeug angeordnet werden kann,
und wobei im zugeordneten Zustand die Richtung der Drehachse (8) des Spindelkörpers (9) und die Richtung der Spindelachse (7) der Antriebsspindel (6) übereinstimmen und eine Bearbeitungsdrehachse (15) ausbilden,
und wobei längs der Bearbeitungsachse eine 2-Kanal-Förderleitung (16) für eine Minimalmengenschmierung vorhanden ist, welche 2-Kanal-Förderleitung (16) einen Schmiermittel- und einen Druckgaskanal aufweist,
und wobei die 2-Kanal-Förderleitung (16) an einem, dem Spindelkörper (9) gegenüberliegenden hinteren Ende (17) eine Medienübernahmevorrichtung (18) und im Bereich der Kupplung (11), eine 2-Kanal-Förderleitungskupplung (19) aufweist,
wobei die 2-Kanal-Förderleitung (16) zumindest über einen Teilabschnitt der Längsverschiebung mit der Antriebsspindel (6) bewegungsverbunden ist **dadurch gekennzeichnet, dass**
die 2-Kanal-Förderleitungskupplung (19) zumindest für den Schmiermittelkanal der Arbeitsspindel (4) ein selbsttätig schließendes Ventil (20) aufweist,
und dass ferner mit dem Schmiermittelkanal der 2-Kanal-Förderleitung (16), im Abschnitt von der Förderleitungskupplung (19) bis zur Medienübernahmevorrichtung (18), ein Volumenausgleichselement (21) verbunden ist, wobei das Volumen der Schmiermittelleitung mit einem Volumen des Volumenausgleichselements (21) verbunden ist, und dass
das Volumenausgleichselement (21) einen, mit dem Schmiermittelkanal verbundenen Kolben aufweist, welcher Kolben relativ zu einem Zylinder des Volumenausgleichselements (21) längsverschiebbar angeordnet ist.

2. Werkstückbearbeitungskopf nach Anspruch 1, **dadurch gekennzeichnet, dass** die Kupplung (11) durch eine Längsverzahnung des hinteren Endes des Spindelkörpers (9) und des vorderen Endes (12) der Antriebsspindel (6) gebildet ist.

3. Werkstückbearbeitungskopf nach Anspruch 1 oder 2, **dadurch gekennzeichnet, dass** die Antriebsspindel (6) und/oder die Aufnahme (5) der Antriebsspindel (6) eine Gleitführung aufweist, welche einen Versatz des vorderen Endes (13) der Antriebsspindel (4) längs der Bearbeitungsdrehachse (15) im Bereich von 10mm - 30mm ermöglicht, insbesondere einen Versatz von 25mm.

4. Werkstückbearbeitungskopf nach einem der Ansprüche 1 bis 3, **dadurch gekennzeichnet, dass** das Volumenausgleichselement (21) in der Medienübernahmevorrichtung (18) angeordnet ist.

5. Werkstückbearbeitungskopf nach einem der Ansprüche 1 bis 3, **dadurch gekennzeichnet, dass** das Volumenausgleichselement (21) in der 2-Kanal-Förderleitungskupplung (19) oder in der 2-Kanal-Förderleitung (16) angeordnet ist.

6. Werkstückbearbeitungskopf nach einem der Ansprüche 1 bis 5, **dadurch gekennzeichnet, dass** die 2-Kanal-Förderleitung (16) als Koaxialleitung ausgebildet ist, wobei der innenliegende Schmiermittelkanal, vom Druckgaskanal umgeben ist.

7. Werkstückbearbeitungskopf nach einem der Ansprüche 1 bis 6, **dadurch gekennzeichnet, dass** der Zylinder einen, die Kolbenseitenwand zumindest abschnittsweise umgebenden Schmiermittel-Transferabschnitt aufweist.

8. Werkstückbearbeitungskopf nach einem der Ansprüche 1 bis 7, **dadurch gekennzeichnet, dass** der Kolben eine Durchführung aufweist, welche eine flüssigkeitsdurchlässige Verbindung zwischen dem Schmiermittelkanal und dem Schmiermittel-Transferabschnitt bildet.

9. Werkstückbearbeitungskopf nach einem der Ansprüche 1 bis 8, **dadurch gekennzeichnet, dass** der Zylinder mit einer Vorrichtung zur Druckbeaufschlagung verbunden ist.

10. Werkstückbearbeitungskopf nach einem der Ansprüche 1 bis 9, **dadurch gekennzeichnet, dass** die 2-Kanal-Förderleitungskupplung (19) im hinteren Ende (10) der Arbeitsspindel (4) angeordnet ist.

11. Werkstückbearbeitungskopf nach einem der Ansprüche 1 bis 10, **dadurch gekennzeichnet, dass** die 2-Kanal-Förderleitungskupplung (19) ein erstes Dichtelement für den Schmiermittelkanal und ein zweites Dichtelement für den Druckgaskanal aufweist, wobei das erste und/oder zweite Dichtelement als O-Ring ausgebildet ist.

12. Werkstückbearbeitungskopf nach einem der Ansprüche 1 bis 11, **dadurch gekennzeichnet, dass** das Ventil (20) ein Ventilgehäuse mit einer kupplungsseitigen Öffnung und ein Anschlusselement für den antriebsspindelseitigen Schmiermittelkanal aufweist, und wobei ferner im Ventilgehäuse vor der Öffnung ein Verschlusselement angeordnet ist.

13. Werkstückbearbeitungskopf nach Anspruch 12, **dadurch gekennzeichnet, dass** das Verschlusselement durch ein druckbeaufschlagtes drittes Dichtelement gebildet ist.

14. Werkstückbearbeitungskopf nach Anspruch 13, **dadurch gekennzeichnet, dass** der Druck der Druckbeaufschlagung kleiner ist als ein Arbeitsdruck im antriebsspindelseitigen Schmiermittelkanal.

15. Werkstückbearbeitungskopf nach Anspruch 12, **dadurch gekennzeichnet, dass** das Verschlusselement durch eine druckbeaufschlagte Klappe mit einem Kontaktabschnitt für den antriebsspindelseitigen (6) Schmiermittelkanal gebildet ist.

16. Werkstückbearbeitungskopf nach Anspruch 12, **dadurch gekennzeichnet, dass** das Verschlusselement durch ein Fliehkraft-Dichtelement gebildet ist.

17. Werkstückbearbeitungskopf nach einem der Ansprüche 1 bis 16, **dadurch gekennzeichnet, dass** die Zuordnungsvorrichtung (3) durch einen Revolverkopf gebildet ist.

## Claims

1. A workpiece processing head (1) comprising
a processing head housing (2), an allocation device (3) connected thereto and at least one work spindle (4) that can be allocated to the processing head housing (2) by the allocation device (3),
wherein a driving spindle (6) is arranged in a receptacle (5) of the processing head housing (2) such that it is rotatable about its spindle axis (7) and the driving spindle (6) or the receptacle (5) is furthermore arranged such that it can be displaced along the spindle axis (7),
wherein the work spindle (4) features a spindle body (9) that is rotatable about its rotational axis (8) and said spindle body (9) is on its rear end (10) rotationally coupled to a front end (12) of the driving spindle (6) by means of a disengageable coupling (11), wherein the spindle body (9) furthermore features on its front end (13) a tool receptacle (14), in which a tool holder with a processing tool can be arranged,
wherein the direction of the rotational axis (8) of the spindle body (9) and the direction of the spindle axis (7) of the driving spindle (6) coincide in the allocated state and form a rotational processing axis (15),
wherein a 2-channel conveyor pipe (16) for minimal lubrication is provided along the processing axis and said 2-channel conveyor pipe (16) features a lubricant channel and a compressed gas channel,
wherein the 2-channel conveyor pipe (16) features a medium transfer device (18) on its rear end (17) lying opposite of the spindle body (9), as well as a 2-channel conveyor pipe coupling (19) in the region of the coupling (11),
and wherein the 2-channel conveyor pipe (16) is motionally connected to the driving spindle (6) at least over a section of the longitudinal displacement,
**characterized in that**
the 2-channel conveyor pipe coupling (19) features an automatically closing valve (20) at least for the lubricant channel of the work spindle (4), **in**
**that** a volume compensation element (21) is furthermore connected to the lubricant channel of the 2-channel conveyor pipe (16) in the section between the conveyor pipe coupling (19) and the medium transfer device (18), wherein the volume of the lubricant channel is connected to a volume of the volume compensation element (21), and **in that** the volume compensation element (21) features a piston, which is connected to the lubricant channel and arranged such that it can be longitudinally displaced relative to a cylinder of the volume compensation element (21).

2. The workpiece processing head according to claim 1, **characterized in that** the coupling (11) is formed by a longitudinal gearing of the rear end of the spindle body (9) and of the front end (12) of the driving spindle (6).

3. The workpiece processing head according to claim 1 or 2, **characterized in that** the driving spindle (6) and/or the receptacle (5) of the driving spindle (6) features a slideway, which allows an offset of the front end (13) of the driving spindle (4) along the rotational processing axis (15) in the range between 10mm - 30mm, particularly an offset of 25 mm.

4. The workpiece processing head according to one of claims 1 to 3, **characterized in that** the volume compensation element (21) is arranged in the medium transfer device (18).

5. The workpiece processing head according to one of claims 1 to 3, **characterized in that** the volume compensation element (21) is arranged in the 2-channel conveyor pipe coupling (19) or in the 2-channel conveyor pipe (16).

6. The workpiece processing head according to one of claims 1 to 5, **characterized in that** the 2-channel conveyor pipe (16) is realized in the form of a coaxial pipe, in which the inner lubricant channel is surrounded by the compressed gas channel.

7. The workpiece processing head according to one of claims 1 to 6, **characterized in that** the cylinder features a lubricant transfer section, which at least sectionally surrounds the piston skirt.

8. The workpiece processing head according to one of claims 1 to 7, **characterized in that** the piston features a leadthrough, which forms a fluidic connection between the lubricant channel and the lubricant transfer section.

9. The workpiece processing head according to one of claims 1 to 8, **characterized in that** the cylinder is connected to a pressure application device.

10. The workpiece processing head according to one of claims 1 to 9, **characterized in that** the 2-channel conveyor pipe coupling (19) is arranged in the rear end (10) of the work spindle (4).

11. The workpiece processing head according to one of claims 1 to 10, **characterized in that** the 2-channel conveyor pipe coupling (19) features a first sealing element for the lubricant channel and a second sealing element for the compressed gas channel, wherein the first and/or the second sealing element is realized in the form of an O-ring.

12. The workpiece processing head according to one of claims 1 to 11, **characterized in that** the valve (20) features a valve housing with an opening on the side of the coupling, as well as a connecting element for the lubricant channel on the side of the driving spindle, wherein a closing element is furthermore arranged in the valve housing in front of the opening.

13. The workpiece processing head according to claim 12, **characterized in that** the closing element is formed by a third sealing element, which is acted upon with pressure.

14. The workpiece processing head according to claim 13, **characterized in that** the pressure acting upon the closing element is lower than a working pressure in the lubricant channel on the side of the driving spindle.

15. The workpiece processing head according to claim 12, **characterized in that** the closing element is formed by a flap, which is acted upon with pressure and features a contact section for the lubricant channel on the side of the driving spindle (6).

16. The workpiece processing head according to claim 12, **characterized in that** the closing element is formed by a centrifugal sealing element.

17. The workpiece processing head according to one of claims 1 to 16, **characterized in that** the allocation device (3) is formed by a turret head.

## Revendications

1. Tête d'usinage de pièce (1) comprenant
un boîtier de tête d'usinage (2), un dispositif d'attribution (3) relié avec celui-ci et au moins une broche de travail (4) pouvant être attribuée par le dispositif d'attribution (3) au boîtier de tête d'usinage (2),
moyennant quoi, dans un logement (5) du boîtier de tête d'usinage (2), est logée de manière rotative autour de son axe de broche (7), une broche d'entraînement (6) et, en outre, la broche d'entraînement (6) ou le logement (5) est disposé de manière coulissante le long de l'axe de broche (7),
et moyennant quoi la broche de travail (4) comprend un corps de broche (9) logé de manière rotative autour de son axe de rotation (8), ce corps de broche (9) étant couplé de manière solidaire en rotation, au niveau d'une extrémité arrière (10), par l'intermédiaire d'un couplage amovible (11), avec une extrémité avant (12) de la broche d'entraînement (6),
et moyennant quoi, en outre, le corps de broche (9) comprend, au niveau d'une extrémité avant (13), un logement d'outil (14) dans lequel un porte-outil peut être attribué à un outil d'usinage,
et moyennant quoi, dans l'état d'attribution, la direction de l'axe de rotation (8) du corps de broche (9) et la direction de l'axe de broche (7) de la broche d'entraînement (6) coïncident et forment un axe de rotation d'usinage (15),
et moyennant quoi, le long de l'axe d'usinage, une conduite de transport à 2 canaux (16) est prévue pour une lubrification à débit minimal, cette conduite de transport à 2 canaux (16) comprenant un canal de lubrifiant et un canal de gaz sous pression,
et moyennant quoi la conduite de transport à 2 canaux (16) comprend, au niveau d'une extrémité arrière (17), opposée au corps de broche (9), un dispositif de prise en charge de fluide (18) et, au niveau du couplage (11), un couplage de conduite de transport à 2 canaux (19),
la conduite de transport à 2 canaux (16) étant reliée de manière solidaire en mouvement, au moins sur une partie du coulissement longitudinal, avec la broche d'entraînement (6), **caractérisée en ce que**
le couplage de conduite de transport à 2 canaux (19) comprend, au moins pour le canal de lubrifiant de la broche de travail (4), une vanne à fermeture automatique (20),
et **en ce que**, en outre, avec le canal de lubrifiant de la conduite de transport à 2 canaux (16), dans la section entre le couplage de conduite de transport (19) et le dispositif de prise en charge de fluide (18), est relié un élément d'équilibrage de volume (21), le volume de la conduite de lubrifiant étant relié avec un volume de l'élément d'équilibrage de volume (21) et **en ce que**
l'élément d'équilibrage de volume (21) comprend un piston relié avec le canal de lubrifiant, ce piston étant disposé de manière coulissante longitudinalement par rapport à un cylindre de l'élément d'équilibrage de volume (21).

2. Tête d'usinage de pièce selon la revendication 1, **caractérisée en ce que** le couplage (11) est constitué d'une denture longitudinale de l'extrémité arrière du corps de broche (9) et de l'extrémité avant (12) de la broche d'entraînement (6).

3. Tête d'usinage de pièce selon la revendication 1 ou 2, **caractérisée en ce que** la broche d'entraînement (6) et/ou le logement (5) de la broche d'entraînement (6) comprend un guidage glissant, qui permet un décalage de l'extrémité avant (13) de la broche d'entraînement (4) le long de l'axe de rotation d'usinage (15) de l'ordre de 10 mm à 30 mm, plus particulièrement un décalage de 25 mm.

4. Tête d'usinage de pièce selon l'une des revendications 1 à 3, **caractérisée en ce que** l'élément d'équilibrage de volume (21) est disposé dans le dispositif de prise de charge de fluide (18).

5. Tête d'usinage de pièce selon l'une des revendications 1 à 3, **caractérisée en ce que** l'élément d'équilibrage de volume (21) est disposé dans le couplage de conduite de transport à 2 canaux (19) ou dans la conduite de transport à 2 canaux (16).

6. Tête d'usinage de pièce selon l'une des revendications 1 à 5, **caractérisée en ce que** la conduite de transport à 2 canaux (16) est conçue comme une conduite coaxiale, le canal de lubrifiant interne étant entouré par le canal de gaz sous pression.

7. Tête d'usinage de pièce selon l'une des revendications 1 à 6, **caractérisée en ce que** le cylindre comprend une portion de transfert de lubrifiant entourant au moins partiellement la paroi latérale du piston.

8. Tête d'usinage de pièce selon l'une des revendications 1 à 7, **caractérisée en ce que** le piston comprend un passage qui assure une liaison perméable aux liquides entre le canal de lubrifiant et la portion de transfert de lubrifiant.

9. Tête d'usinage de pièce selon l'une des revendications 1 à 8, **caractérisée en ce que** le cylindre est relié avec un dispositif d'alimentation en pression.

10. Tête d'usinage de pièce selon l'une des revendications 1 à 9, **caractérisée en ce que** le couplage de conduite de transport à 2 canaux (19) est disposé à l'extrémité arrière (10) de la broche de travail (4).

11. Tête d'usinage de pièce selon l'une des revendications 1 à 10, **caractérisée en ce que** le couplage de conduite de transport à 2 canaux (19) comprend un premier élément d'étanchéité pour le canal de lubrifiant et un deuxième élément d'étanchéité pour le canal de gaz sous pression, le premier et/ou le deuxième élément d'étanchéité étant conçu comme un joint torique.

12. Tête d'usinage de pièce selon l'une des revendications 1 à 11, **caractérisée en ce que** la vanne (20) comprend un boîtier de vanne avec une ouverture côté couplage et un élément de raccordement pour le canal de lubrifiant côté broche d'entraînement et un élément de fermeture étant en outre prévu dans le boîtier de vanne, avant l'ouverture.

13. Tête d'usinage de pièce selon la revendication 12, **caractérisée en ce que** l'élément de fermeture est constitué d'un troisième élément d'étanchéité alimenté en pression.

14. Tête d'usinage de pièce selon la revendication 13, **caractérisée en ce que** la pression de l'alimentation en pression est inférieure à une pression de service dans le canal de lubrifiant côté broche d'entraînement.

15. Tête d'usinage de pièce selon la revendication 12, **caractérisée en ce que** l'élément de fermeture est constitué d'un clapet alimenté en pression avec une portion de contact pour le canal de lubrifiant côté broche d'entraînement (6).

16. Tête d'usinage de pièce selon la revendication 12, **caractérisée en ce que** l'élément de fermeture est constitué d'un élément d'étanchéité à force centrifuge.

17. Tête d'usinage de pièce selon l'une des revendications 1 à 16, **caractérisée en ce que** le dispositif d'attribution (3) est constitué d'une tête révolver.
